## Europäisches Patentamt
## European Patent Office
## Office européen des brevets

(19)

(11) Veröffentlichungsnummer : **0 189 131**
**B1**

(12) **EUROPÄISCHE PATENTSCHRIFT**

(45) Veröffentlichungstag der Patentschrift :
02.11.89

(21) Anmeldenummer : 86100543.7

(22) Anmeldetag : 17.01.86

(51) Int. Cl.⁴ : **B 29 B 13/02**, B 29 C 47/00,
B 29 C 45/00, H 01 B 1/00 //
B29K105:24, B29K105:12,
B29L31:34

(54) Verfahren zum Verformen kleiner Thermoplastteilchen zu Formteilen und deren Verwendung in der Elektroindustrie.

(30) Priorität : 23.01.85 DE 3502078

(43) Veröffentlichungstag der Anmeldung :
30.07.86 Patentblatt 86/31

(45) Bekanntmachung des Hinweises auf die Patenterteilung : 02.11.89 Patentblatt 89/44

(84) Benannte Vertragsstaaten :
AT BE DE FR GB IT NL

(56) Entgegenhaltungen :
EP--B-- 0 013 753
EP--B-- 0 013 872
DE--A-- 2 533 324
GB--A-- 1 358 886

(73) Patentinhaber : BASF Aktiengesellschaft
Carl-Bosch-Strasse 38
D-6700 Ludwigshafen (DE)

(72) Erfinder : Seiler, Erhard, Dr.
Erpolzheimer Strasse 1
D-6700 Ludwigshafen (DE)
Erfinder : Kaiser, Uwe
Carostrasse 1
D-6710 Frankenthal (DE)
Erfinder : Welz, Martin
Kaiserslauterer Strasse 231
D-6702 Bad Duerkheim (DE)
Erfinder : Giesen, Klaus
Steinbrink 35
D-2845 Damme (DE)
Erfinder : Theysohn, Rainer, Dr.
Am Bruch 38
D-6710 Frankenthal (DE)
Erfinder : Schlag, Johannes, Dr.
Leuschnerstrasse 36
D-6700 Ludwigshafen (DE)
Erfinder : Grzesitza, Johannes
Pranckstrasse 52
D-6700 Ludwigshafen (DE)

## Beschreibung

Die Erfindung betrifft ein Verfahren zum Verformen kleiner Thermoplastteilchen, die an der Außenschicht leitfähige Additive in hochangereicherter Form enthalten, im Inneren aber aus möglichst additivfreiem Thermoplast bestehen unter weitgehender Beibehaltung der inhomogenen Struktur aus additivfreier und additiventhaltender Thermoplastanordnung zu Formteilen mit elektrischen Leitfähigkeiten von mindestens 0,001 S/cm.

Bei derartigen Formteilen soll es sich um Platten, Rohre, Stangen, Profile und kompliziert verformte Fertigteile handeln, die wegen ihrer relativ hohen elektrischen Leitfähigkeit in der Elektroindustrie z. B. als Stromträger elektrischen Leitfähigkeit in der Elektroindustrie z. B. als Stromträger oder als Heizflächenelement Verwendung finden können.

Aus der EP-B1-13 753 ist es bereits bekannt, elektrisch leitende Polyolefinformkörper durch Verformen kleiner Polyolefinteilchen, die an der Außenschicht leitfähige Additive in hochangereicherter Form enthalten, im Inneren aber aus möglichst additivfreiem Thermoplast bestehen unter Beibehaltung der inhomogenen Struktur herzustellen. Bei diesem bekannten Verfahren werden aus den kleinen Polyolefinteilchen im kontinuierlichen oder diskontinuierlichen Preßverfahren bei möglichst geringer Scherung elektrisch leitende Halbzeugplatten hergestellt. Das erhaltene elektrisch leitende Halbzeug kann einer nachtraglichen Formgebung z. B. durch Tiefziehen unterworfen werden, wobei kein Fließen auftreten soll und auftretende Scherkrafte möglichst klein gehalten werden sollen. Ein analoges Verfahren ist auch in der Druckschrift EP-81-13 872 beschrieben. Als leitfähiges Additiv wird bei diesem bekannten Verfahren Leitfähigkeitsruß verwendet, die hergestellten kleinen Polyolefinteilchen können nach üblichen Spritzguß-, Extrusions- und Hohlkörperblasverfahren zu Formkörpern mit einem Oberflächenwiderstand von $< 10^{10}$ Ohm verarbeitet werden.

Die Herstellung von elektrisch leitenden Formkörpern aus kleinen Thermoplastteilchen, die im Inneren gleichmäßig verteilt ein elektrisch leitendes Additiv wie Ruß sowie oberflächlich einen dünnen Belag einer ebenfalls elektrisch leitenden, feinverteilten Substanz, vorzugsweise Silberpulver, enthalten, ist in der US-A-3 003 975 beschrieben. Bei diesem Verfahren werden die kleingen Thermoplastteilchen nach üblichen Verfahren verformt.

In der Vorveröffentlichung JP-A2-56/144771 (vgl. Derwent Abstracts 94 137 D/51) ist ein Verfahren zur Herstellung elektrisch leitfähiger Thermoplastformkörper beschrieben, bei dem auf die Oberfläche des Formkörpers eine Schicht aus kleinen Thermoplastteilchen, die an der Oberfläche leitfähige Additive enthalten, aufgebracht wird.

Aus der Schrift JP-A2-58/075706 (vgl. Derwent Abstracts 83-767 153/38) schließlich ist ein leitfähiger Thermoplastformkörper bekannt, der aus einer Polyolefinmatrix besteht, in der gleichmäßig Teilchen aus mit nichtleitendem Füllstoff gefülltem Polyethylen vorhanden sind, die and der Oberfläche mit leitfähigen Additiven wie Leitfähigkeitsruß versehen sind. Diese bekannten Formkörper mit elektrischer Leitfähigkeit werden nach üblichen Verfahren wie Extrusion hergestellt.

Nachteilig bei den üblichen Techniken der Extrusion und des Spritzgießens von Thermoplastteilchen, die an der Außenschicht leitfähige Additive enthalten, ist die Tatsache, daß die Leitfähigkeit der erhaltenen Halbzeuge und Fertigteile stark erniedrigt ist. Das in den EP-B1-13753 und EP-B1-13872 beschriebene Preßverfahren weist zudem starke Einschränkungen hinsichtlich der Formgebung auf, da so weder Rohre, Profile oder Stangen noch komplizierte Fertigteile mit hoher elektrischer Leitfähigkeit zu erhalten sind.

Aufgabe der Erfindung war es daher, Verfahren zu finden, welche die Formgebung zu Rohren, Stangen, Profilen, Platten und komplizierten Fertigteilen erlauben, die gleichzeitig eine hohe Leitfähigkeit bei niederer Konzentration an leitfähigen Additiven aufweisen.

Diese Aufgabe wurde durch die Verfahren gemäß Patentansprüchen 1 bis 5 gelöst.

Unter kleinen Thermoplastteilchen, die an der Außenschicht leitfähige Additive in hochangereicherter Form enthalten, im Inneren aber aus möglichst additivfreien Thermoplast bestehen, soll es sich um die in den Druckschriften EP-B1-13 753 und EP-B1-13 872 beschriebenen Teilchen mit mittleren Korngrößen von 10 bis 5.000 μm handeln. Als Thermoplast sind alle Kunststoffe mit thermoplastischen Eigenschaften brauchbar, insbesondere geeignet sind aber die Polyolefine, bevorzugt das Polyethylen hoher Dichte im Dichtebereich von 0,935 bis 0,965 g/cm³ und übliches Polypropylen. Die Thermoplaste sollten bevorzugt eine Grenzviskosität, gemessen nach DIN 53 728 in Decalin bei 135 °C, im Bereich von 0,5 bis 15 haben. Besonders bevorzugt sind Thermoplastteilchen aus einem Polyethylen der Dichte 0,94 bis 0,96 g/cm³ und des Schmelzindex 0,5 bis 20 g/10 min, gemessen bei 190 °C und 21,6 kg nach DIN 53 735, die in Grießform mit einer mittleren Korngröße von 100 bis 1000 μm und einer Außenschichtdicke von 5 bis 20 μm vorliegen. Als leitfähige Additive kommen insbesondere geperlter oder pulverförmiger Leitfähigkeitsruß, Aluminiumpulver, -flocken oder -fasern, Eisenpulver, Kupferpulver, Kohlefasern, aluminisierte Glasfasern, vernickelte Glas-oder Kohlefasern ect in Frage. Die Herstellung der Compounds nach der Prallsintertechnik ist bekannt, so daß sich eine eingehende Beschreibung erübrigt.

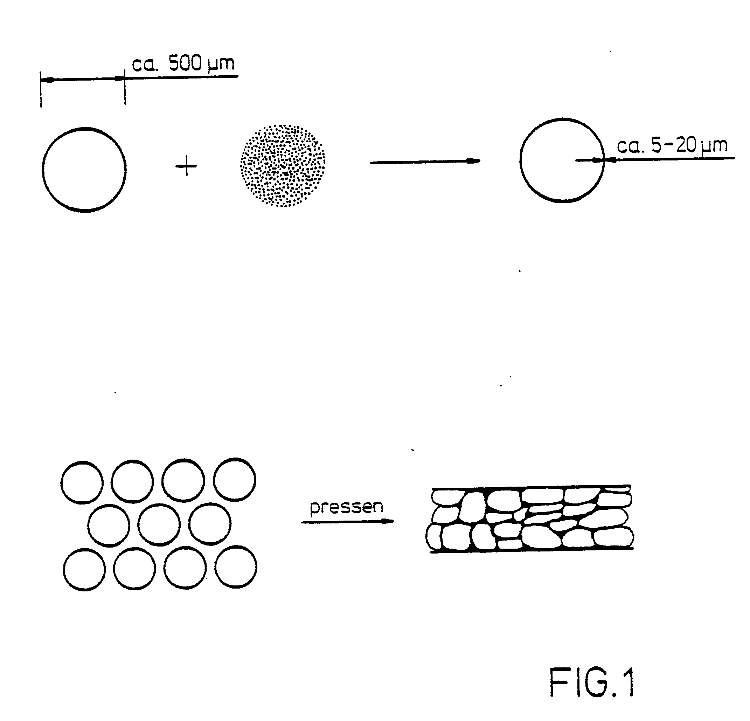

Die durch Verformung der Thermoplastteilchen hergestellten Formteile sollen eine weitgehend inhomogene Struktur aus additivfreier und additiventhaltender Thermoplastanordnung aufweisen. Derartige Strukturen sind nach bekannten Verfahren so erhalten worden, daß man Teilchen, deren Thermoplastkern nahezu frei von Additiv ist, während in der Außenschicht (Mantel) eine hohe Konzentration an Additiv herrscht, bei hohen Drücken und weitgehender Vermischung von Scherung verpreßt (vgl. EP-B1-13753). Beim nachträglichen Verformen der Halbzeugplatten durch Umformen sind die auftretenden Scherkräfte klein zu halten. In Fig. 1 ist der Vorgang des Verpressens zu Formkörpern unter weitgehender Beibehaltung der inhomogenen Struktur der Teilchen schematisch dargestellt. Die elektrische Leitfähigkeit der erhaltenen Formteile soll größer als 0,001 S/cm betragen (entsprechend einem Durchgangswiderstand kleiner als $10^3$ Ω.cm), insbesondere im Bereich von 0,05 bis 5 S/cm liegen.

Im Gegensatz zu dem aus der Druckschrift EP-B1-13 753 bekannten Verfahren wird bei dem erfindungsgemäßen Verfahren der Compound aus kleinen Thermoplastteilchen und Additiv voll durchgeschmolzen und als Schmelze bewegt. Die Verformung soll hierzu erfindungsgemäß durch Aufheizen der Teilchen unter Druck und bei minimaler Schergeschwindigkeit bis zum Schmelzen des Thermoplasten erfolgen und die resultierende Schmelze soll unter einem nur in einer Richtung wirkenden Druck mit einer Fließgeschwindigkeit von 5 bis 150 und mit niedriger Schergeschwingkeit durch ein Formgebungselement bewegt werden, wobei beim Aufheizen und Bewegen des Thermoplasten der Druck größer als 500 bar und die Schwergeschwindigkeit kleiner als 100 $sec^{-1}$ sein soll.

Bevorzugt ist ein Verfahren, bei dem die Verformung durch Extrusion unter gleichzeitiger Vernetzung des Thermoplasten gemäß Th. Engel/Wirsbo nach den in EP-B1-33 587 und DE-B-16 79 826 beschriebenen Verfahren erfolgt. Bevorzugt kann die Verformung auch durch Ram-Extrusion nach dem in « Kirk-Othmer, Encyclopedia of Chemical Technology », 3. ed., Vol. 11 (1980), John Wiley & Sons, Inc., page 16 und « Kunststoffe », 69 (1979), Seiten 62 bis 66 beschriebenen Verfahren vorgenommen werden. Besonders bevorzugt werden zur Verformung auch Kolbenspritzgußmaschinen [(vgl. H. Schaab u. K. Stoeckhert, Kunststoff-Maschinen-Führer, Carl-Hanser-Verlag 1979, insbesondere Seiten 265 bis 272)] verwendet.

Die nach dem Schmelzen des Thermoplasten erhaltene Schmelze wird unter der Einwirkung von Druck, der nur in eine Richtung wirkt, mit einer Fließgeschwindigkeit von 5 bis 150, bevorzugt 30 bis 100 m/Stunde durch ein Formgebungselement wie Profildüse, Ringdüse, Lochdüse oder Breitschlitzdüse etc. bewegt. Bei dieser Förderungsbewegung soll die Scherung senkrecht zur Förderrichtung minimal sein. Auf diese Weise wird jegliche Turbulenz in der Bewegung vermieden, die Strömung der Schmelze ist weitgehend laminar. Bevorzugt ist beim Aufheizen und Fördern der Schmelze der Druck größer als 500 bar, insbesondere zwischen 1000 und 3000 bar und es ist die Schergeschwindigkeit kleiner als 100 $sec^{-1}$, bevorzugt im Bereich von 2 bis 50 $sec^{-1}$.

Aus der Fülle verschiedenster geeigneter Verarbeitungstechniken für die Compounds erwies sich die Extrusion nach Th. Engel (vgl. DE-B-16 79 826) und Wirsbo Bruks Aktiebolag, S 730671 Virsbo (vgl. EP-B1-00 33 537) mit gleichzeitiger Vernetzung des Thermoplasten sowie die Ram-Extrusion [vgl. Kirk-Othmer, Encyclopedia of Chemical Technology, 3. ed., Vol. 11 (1980), John Wiley & Sons, Inc., page 16 und Kunststoffe, 69 (1979), Seiten 62 bis 66], für die Herstellung von Rohren, Stangen, Platten und Profilen. In beiden Verfahren wird auf eine Plastifizierung durch Schnecken verzichtet. Ähnlich erfolgreich können sogar komplizierte Fertigteile mit hoher elektrischer Leitfähigkeit erhalten werden, wenn übliche Kolbenspritzgußmaschinen [(vgl. H. Schaab u. K. Stoeckhert, Kunststoff-Maschinen-Führer, Carl-Hanser-Verlag 1979, insbesondere Seiten 265 bis 272)] verwendet werden, wobei auf möglichst großvolumige Stangenangußsysteme zurückzugreifen ist und auf möglichst niedrige Spritzgeschwindigkeiten geachtet werden soll. Bei dem Extrusionsverfahren nach Th. Engel und Wirsbo auf speziellen, kontinuierlich arbeitenden Kolbenstrangpressen unter hohem Druck ist eine Vernetzung des Thermoplasten, z. B. des Polyolefins, während des Extrusionsvorgangs notwendig. Hierzu werden dem Compound Vernetzungsmittel, in der Regel organische Peroxide wie Dicumylperoxid in Mengen von ca. 0,5 Gew.% zugesetzt.

Die bei der sog. Ram-Extrusion verwendeten Geräte bestehen aus dem Formgebungswerkzeug und einem Preßstempel, der mittels eines Hydraulikzylinders bewegt wird, der Preßstempel wird durch die Kavität des Formgebungswerkzeugs geführt, das Formgebungswerkzeug ist beheizt. In der hin- und hergehenden Bewegung des Preßstempels wird hubweise das durch die Kern/Mantelstruktur gekennzeichnete Granulat, Pulver oder der Gries in das Formgebungswerkzeug gedrückt und durch die Wärmezufuhr so weit plastifiziert, daß unter Druck des Preßstempels die Verschmelzung zum Profil oder Rohr erreicht wird. Geräte dieser Art arbeiten mit Geschwindigkeiten des Preßstempels von 0,5 bis 18 cm/sec. Er preßt dann das Granulat, Pulver oder den Gries mit einem spezifischen Druck von ca. 200 bar zum Profil oder Rohr.

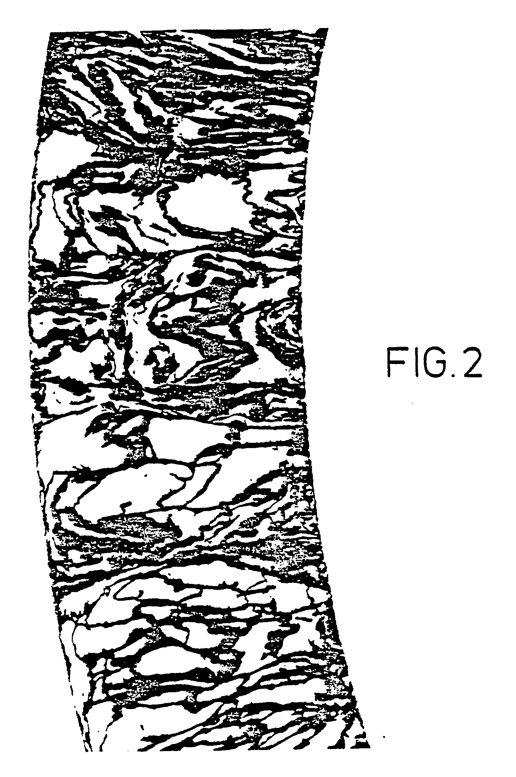

Die mit der Erfindung erzielten Vorteile sind insbesondere darin zu sehen, daß der voll durchgeschmolzene Thermoplastcompound beim Durchgang durch Loch-, Ring- bzw. Profildüsen trotz der dort auftretenden Scherkräfte nicht homogen durchmischt wird, sondern vielmehr eine zwar verzerrte ab er sonst nahezu unversehrte Kern-/Mantel-Struktur, wobei der Mantel aus hochangereichertem leitfähigen Additiv und der Kern aus möglichst reinem Thermoplast vorliegt, aufweist. Eine derartige Struktur ist in Fig. 2 aufgezeigt. Die erhaltenen Formkörper weisen eine hohe elektrische Leitfähigkeit auf.

Beispiel 1

Gemäß Beispiel 1 aus EP-B1-13872 wird ein leitfähiger Grieß der mittleren Teilchengröße von 600 μm

mit Kern-/Mantelstruktur aus hochmolekularem Polyethylen der Dichte 0,955 g/cm$^3$ und Leitfähigkeitsruß Ketjen-Black EC 10 der Fa. Akzo (6,4 Gew.%) hergestellt.

Der so erhaltene Grieß wurde

a) konventionell durch Extrusion mit Schneckenextruder (Typ V8 der Fa. Kautex) zu Rohren mit Wandstärke 2,5 mm und $\varnothing$ 25 mm verarbeitet (Vergleichsbeispiel) ; Schergeschwindigkeit im Schnecken-plastifizierteil ca. 500 sec$^{-1}$.

b) gemäß EP-B1-33587 bzw. DE-A-16 79 826 (Th. Engel/Wirsbo) zu einem vernetzten Rohr gleicher Dimensionierung wie a) verarbeitet (erfindungsgemäß) ; Schergeschwindigkeit ca. 35 sec$^{-1}$

c) durch Ram-Extrusion bei 210 °C und ca. 200 bar Druck zu Rohren analog wie a) und b) verarbeitet (erfindungsgemäß) ; Schergeschwindigkeit ca. 15 sec$^{-1}$

d) mit Hilfe einer Kolbenspritzgußmaschine (Typ C4b der Fa. Arburg zu einem stangenförmigen Probekörper mit $\varnothing$ 12 mm verarbeitet (erfindungsgemäß) ; Schergeschwindigkeit ca. 50 sec$^{-1}$.

An den aus Beispiel 1a) und d) erhaltenen Probekörpern (Halbzeuge bzw. Fertigteile) wurde der Oberflächenwiderstand und der spezifische Durchgangswiderstand ermittelt.

| Bei-spiel | Oberflächenwiderstand [$\Omega$] | | spez. Durchgangswiderstand [$\Omega \cdot$cm] | |
|---|---|---|---|---|
| | parallel | senkrecht | parallel | senkrecht |
| a | $2 \cdot 10^7$ | $4 \cdot 10^7$ | $5 \cdot 10^5$ | $4 \cdot 10^6$ |
| b | 170 | 300 | 70 | 200 |
| c | 200 | 400 | 600 | 1500 |
| d | 400 | 1800 | 700 | 2500 |

An Dünnschnitten die aus den Rohren bzw. dem Vollstab entnommen wurden und von denen lichtmikroskopische Aufnahmen angefertigt wurden war bei der erfindungsgemäßen Vorgehensweise deutlich die weitgehend unversehrte allerdings verzerrte Kern-/Mantelstruktur zu erkennen (vgl. Fig. 2), während nach Vergleichsbeispiel a) eine durchgehend schwarze homogene Struktur resultierte.

## Patentansprüche

1. Verfahren zum Verformen kleiner Thermoplastteilchen, die an der Außenschicht leitfähige Additive in hochangereicherter Form enthalten, im Inneren aber aus möglichst additivfreiem Thermoplast bestehen unter weitgehender Beibehaltung der inhomogenen Struktur aus additiv-freier und additiventhaltender Thermoplastanordnung zu Formteilen mit elektrischen Leitfähigkeiten von mindestens 0,001 S/cm, dadurch gekennzeichnet, daß die Verformung durch Aufheizen der Teilchen unter Druck und minimaler Scherung bis zum Schmelzen des Thermoplasten erfolgt und die resultierende Schmelze unter einem nur in einer Richtung wirkenden Druck mit einer Fließgeschwindigkeit von 5 bis 150 m/Stunde und mit niedriger Schergeschwindigkeit durch ein Formgebungselement bewegt wird, wobei beim Aufheizen und Bewegen des Thermoplasten der Druck größer als 500 bar und die Schergeschwindigkeit kleiner als 100 sec$^{-1}$ ist.

2. Verfahren nach Anspruch 1, dadurch gekennzeichnet, daß die Verformung durch Strangpressen des Thermoplasten unter gleichzeitiger Vernetzung nach Th. Engel/Wirsbo erfolgt.

3. Verfahren nach Anspruch 1, dadurch gekennzeichnet, daß die Verformung durch Ram-Extrusion erfolgt.

4. Verfahren nach Anspruch 1, dadurch gekennzeichnet, daß die Verformung mit Kolbenspritzgußmaschinen vorgenommen wird.

5. Verwendung der nach Ansprüchen 1 bis 5 erhaltenen Formteile in der Elektroindustrie.

## Claims

1. A process for molding small thermoplastic particles which contain conductive additives in highly concentrated form in the outer layer but whose interior consists of a thermoplastic which as far as possible is free of additives, with substantial retention of the inhomogeneous structure of the arrangement of additive-free and additive-containing thermoplastics, to give moldings having electrical conductivities of not less than 0.001 S/cm, wherein molding is effected by heating the particles under superatmospheric pressure and with minimum shearing until the thermoplastic melts, and the resulting melt is moved through a shaping element under a pressure which acts only in one direction, at a flow rate

# EP 0 189 131 B1

of from 5 to 150 m/hour and at a low shear rate, the pressure being greater than 500 bar and the shear rate smaller than 100 sec$^{-1}$ during heating and movement of the thermoplastic.

2. A process as claimed in claim 1, wherein molding is carried out by extrusion of the thermoplastic with simultaneous crosslinking according to Th. Engel/Wirsbo.

3. A process as claimed in claim 1, wherein molding is carried out by ram extrusion.

4. A process as claimed in claim 1, wherein molding is carried out using a plunger injection molding machine.

5. Use of a molding obtained as claimed in any of claims 1 to 5 in the electrical industry.

**Revendications**

1. Procédé de formage de petites particules de matière thermoplastique qui contiennent, dans la couche extérieure, une forte concentration d'additifs conducteurs, mais sont constituées intérieurement de matière thermoplastique aussi exempte d'additifs que possible, pour obtenir, en conservant dans une large mesure la structure non homogène faite de matières thermoplastiques exempte d'additifs et contenant des additifs, des pièces moulées ayant des conductivités électriques d'au moins 0,001 S/cm, caractérisé en ce que le formage est effectué par chauffage des particules sous pression et dans des conditions minimales de cisaillement jusqu'à la fusion de la matière thermoplastique, et la masse fondue résultante est envoyée à travers un élément de modelage sous une pression qui n'agit que dans un sens, à une vitesse d'écoulement de 5 à 150 m/h et à une faible vitesse de cisaillement, la pression lors du chauffage de la matière thermoplastique et de son passage à travers l'élément de modelage étant supérieure à 500 bars et la vitesse de cisaillement étant inférieure à 100 s$^{-1}$.

2. Procédé selon la revendication 1, caractérisé en ce que le formage est effectué par extrusion de la matière thermoplastique avec réticulation simultanée selon la méthode de Th. Engel/Wirsbo.

3. Procédé selon la revendication 1, caractérisé en ce que le formage est effectué par extrudo-sintérisation.

4. Procédé selon la revendication 1, caractérisé en ce que le formage est effectué avec des presses d'injection à piston.

5. Utilisation des pièces moulées obtenues selon l'une quelconque des revendications 1 à 5 dans l'industrie électrotechnique.

ca. 500 µm

+

ca. 5-20 µm

pressen

FIG.1

FIG.2